# EUROPEAN PATENT APPLICATION

(11) **EP 4 640 111 A1**
(43) Date of publication of application: **29.10.2025**
(21) Application number: 25172204.7
(22) Date of filing: 24.04.2025
(51) Int. Cl.: A45D 40/00, B65D 77/04

(54) **REMOVABLE CONTAINER FOR A PACKAGING DEVICE OF A REFILLABLE COSMETIC PRODUCT AND PACKAGING DEVICE OF A REFILLABLE COSMETIC PRODUCT**

(30) Priority: 25.04.2024 FR 2404336
(71) Applicant: Guerlain, 75008 Paris (FR); Knoll Printing & Packaging, Inc., Woodbury NY 11797 (US)
(72) Inventor: MÉCHINEAU, ÉRIC, 75001 PARIS CEDEX (FR); VERWAERDE, Sébastien, 75001 PARIS CEDEX (FR); COHEN, Jeremy, Woodbury, NY 11797 (US)
(74) Representative: Plasseraud IP

(57) **Abstract**

A removable container (12) for a cosmetic product is intended to be received in an outer shell (14) of a cosmetic product packaging device (10). The removable container (12) comprises a cup (34) in a cellulose-based material, covered, on an inner face (34A), intended to be oriented towards the cosmetic product, by a barrier film (38). The barrier film (38) is adapted to limit or even prevent the migration of at least one component of the cosmetic product through the cup (34).

## Description

### Technical field

The present disclosure relates to a removable container for a packaging device of a refillable cosmetic product and to a packaging device of a refillable cosmetic product comprising such a removable container. A refill of a cosmetic product comprising such a removable container is also described.

### Prior art

Users are particularly sensitive to the esthetics of cosmetic product packaging devices. However, the cost of esthetic packaging devices is high and this increases the cost of cosmetic products sold in this form in commerce.

An idea has been developed consisting of providing an esthetic packaging device, including a separate removable container that is less esthetic, but which has less expensive packaging. Preferably, the container is removable so as to be able to refill the packaging device, by replacing the removable container.

This removable container is generally in plastic. However, such a container in plastic leads to ecological problems, particularly recycling, to which users are increasingly sensitive. Furthermore, the recycling standards of packaging devices are always stricter, which tends to limit or even preclude the use of plastic.

Moreover, EP-4 233 636 describes a container for a fluid or powdery substance comprising an external element made of glass and a internal element inserted into a mouth of the external element. At the mouth of the external element, the internal element comprises at least two perimeter swellings which, upon deforming at least elastically, fasten the internal element to the external one. The internal element can be made in a paper-based or card-board-based material. The internal element can comprise a lining or a coating of the paper-based or card-board-based material. The lining or coating can be in a plastic material, for example PE, PLA, HDPE, PP or with wax.

### Summary

The present disclosure improves the situation. In particular, an object of the present disclosure is to propose a packaging device of a cosmetic product that is refillable and that does not present at least some of the abovementioned disadvantages.

For this purpose, a removable container for a cosmetic product is proposed, intended to be received in an outer shell of a packaging device of a cosmetic product, the removable container comprising a cup in a cellulose-based material, covered, on an inner face, intended to be oriented toward the cosmetic product, by a barrier film adapted to limit or even prevent the migration of at least one component of the cosmetic product through the cup. The barrier film may be multilayered. The barrier film may comprise at least five layers. One of the at least five layers may be made of cyclic olefin copolymer.

Preferably the removable container may comprise one or more of the following features, taken alone or in combination:
- the cellulose-based material contains fibers from at least one from among bamboo, bagasse, wood, and recycled paper;
- the cellulose-based material comprises a mixture of between 50 and 70% by weight of fibers, of bamboo fibers, particularly 60% by weight, and the complementary to 100% by weight of fibers, of bagasse fibers;
- the barrier film comprises at least one layer in at least one from among polyethylene, polypropylene, polyamide, ethylene vinyl alcohol, ethylene vinyl acetate;
- the barrier comprises exactly seven layers;
- the barrier film comprises the seven following layers, from a first layer designed to be oriented towards the cosmetic product, to a seventh layer oriented towards the cellulose-based material of which the cup is made from:
   -- a first layer of polyethylene;
   -- a second layer of cyclic olefin copolymer;
   -- a third layer of chemical binder, particularly a layer of a polymer comprising ethylene or an olefin-based adhesion resin;
   -- a fourth layer of ethylene vinyl alcohol;
   -- a fifth layer of a chemical binder, particularly a layer of a polymer comprising ethylene or an olefin-based adhesion resin;
   -- a sixth layer of cyclic olefin copolymer; and
   -- a seventh layer of ethylene vinyl acetate;
- the removable container furthermore comprises an inner seal closing the cup, the inner seal preferably being in aluminum or in an aluminum alloy, in a plastic material, in particular in polyethylene terephthalate or in polyethylene furanoate, or in paper, particularly in coated paper;
- the inner seal is covered, on at least one inner face, intended to be oriented towards the cosmetic product inside the cup, by a coating impermeable to liquids and, preferably, impermeable to gases, the impermeable coating preferably containing an epoxy resin and a methacrylate olefin polymer;
- the cup presents a bottom, an opening and a lateral wall between the bottom and the opening;
- the lateral wall of the cup forms a flange, preferably substantially flat, extending between an inner edge, delimiting the opening of the removable container, and an outer edge, opposite from the inner edge, the flange preferably being at least partially covered by the barrier film;
- the flange presents at least one from among a portion having a decreasing thickness in the direction of the outer edge of the flange and a thinning, near the outer edge;
- the flange presents a thinning extending to the outer edge;
- the flange presents a thinning, distant from the outer edge;
- the inner seal is fixed, particularly bonded or welded, on the flange near a fixation area, the fixation area being disposed closer to the inner edge of the flange than the portion having decreasing thickness or the thinning, respectively;
- the removable container comprises a plurality of swellings on the outer surface, the swellings preferably being equiangularly distributed on the removable container;
- the at least one swelling is formed on the cup, particularly on the lateral wall of the cup;
- the at least one swelling is formed on a shell in a cellulose-based material, particularly in the same material as the cup, the shell receiving the cup;
- the shell forms a flange, the cup and the shell being fixed together at their respective flanges, particularly by bonding or welding;
- the shell is covered, on a face oriented towards the cup, by a barrier film, the barrier film on the shell preferably being identical to the barrier film on the cup; and
- the cup contains the cosmetic product; and
- the lateral wall presents a shoulder near the opening of the cup.

According to another aspect, a refill is described of the cosmetic product comprising at least one removable container as described above, in all of its combinations, in a sealed envelope, preferably airtight, or in a case in cellulose or in molded cardboard.

According to still another aspect, a packaging device for a cosmetic product comprising an outer shell and a removable container such as described above, in all of its combinations, is described, the outer shell defining a compartment for receiving the removable container, the compartment for receiving the removable container opening at an outlet in the outer shell. The outer shell is preferably in one from among: glass, metal, ceramic, porcelain, crystal and plastic, particularly polymethyl methacrylate, polystyrene, polycarbonate, polyethylene terephthalate, ionomeric resin such as the ethylene vinyl copolymer known by the trade name Surlyn^{®}, polyethylene, polypropylene, copolyester, natural stone, synthetic stone, wood, and urea formaldehyde.

The removable container may be held in position in the outer shell by deformation of at least one swelling of the removable container in contact with the outer shell, preferably at least two swellings of the removable container where appropriate, the removable container more preferably containing the cosmetic product.

Deformation of the at least one swelling of the removable container may be an elastic deformation.

Deformation of the at least one swelling of the removable container may be a plastic deformation.

The cosmetic product packaging device may furthermore comprise a lid able to close the outlet of the recess in the outer shell, even when a removable container is received in the recess in the outer shell, particularly by being fixed onto the outer shell.

The lid may be in one from among glass, metal, ceramic, porcelain, crystal, plastic, natural stone, synthetic stone, wood, and urea formaldehyde.

### Brief description of the drawings

Other features, details and advantages will appear upon reading the detailed description below, and analyzing the attached drawings, in which:
FIG. 1 schematically represents a longitudinal cross-section view of a cosmetic product packaging device.
FIG. 2 schematically represents a longitudinal cross-section view of a sub-assembly of the cosmetic product packaging device of FIG. 1, the sub-assembly comprising an outer shell and a removable container.
FIG. 3 schematically represents in cross section a portion of the thickness of the cup of the removable container of FIG. 2, covered by an inner seal.
FIG. 4 schematically represents a front view of a first example of a removable container that can be employed in the packaging device of FIG. 1.

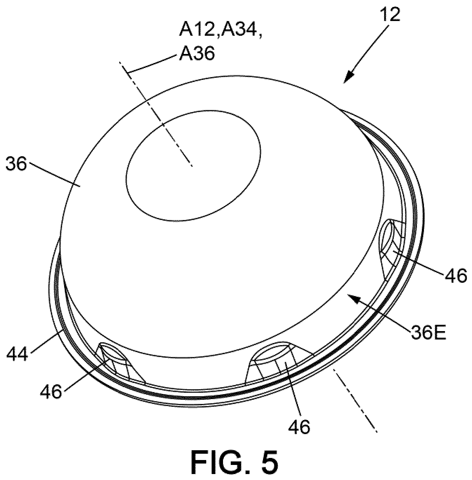

FIG. 5 schematically represents in perspective the removable container of FIG. 4.
FIG. 6 represents in longitudinal cross-section view a refill of the cosmetic product including the removable container of FIG. 4.
FIG. 7 represents a detail of a longitudinal cross-section view of a first example of a removable container fixed on the outer shell in a packaging device according to FIG. 1.
FIG. 8 represents a detail of a longitudinal cross-section view of a second example of a removable container fixed on the outer shell in a packaging device according to FIG. 1.
FIG. 9 represents a detail of a longitudinal cross-section view of a third example of a removable container fixed on the outer shell in a packaging device according to FIG. 1.
Fig. 10 illustrates a detail of a longitudinal cross-section view of a fourth example of a removable container that can be employed in a packaging device according to Fig. 1.
FIG. 11 represents a detail of a longitudinal cross-section view of a fifth example of a removable container fixed on the outer shell in a packaging device according to FIG. 1.
FIG. 12 represents a detail of a longitudinal cross-section view of a sixth example of a removable container fixed on the outer shell in a packaging device according to FIG. 1.

### Description of embodiments

In the rest of the description, elements that are identical or that have identical functions bear the same reference signs. For the sake of brevity in the present description, these elements are not described in detail in each example. On the contrary, only the differences between the different examples are described in detail.

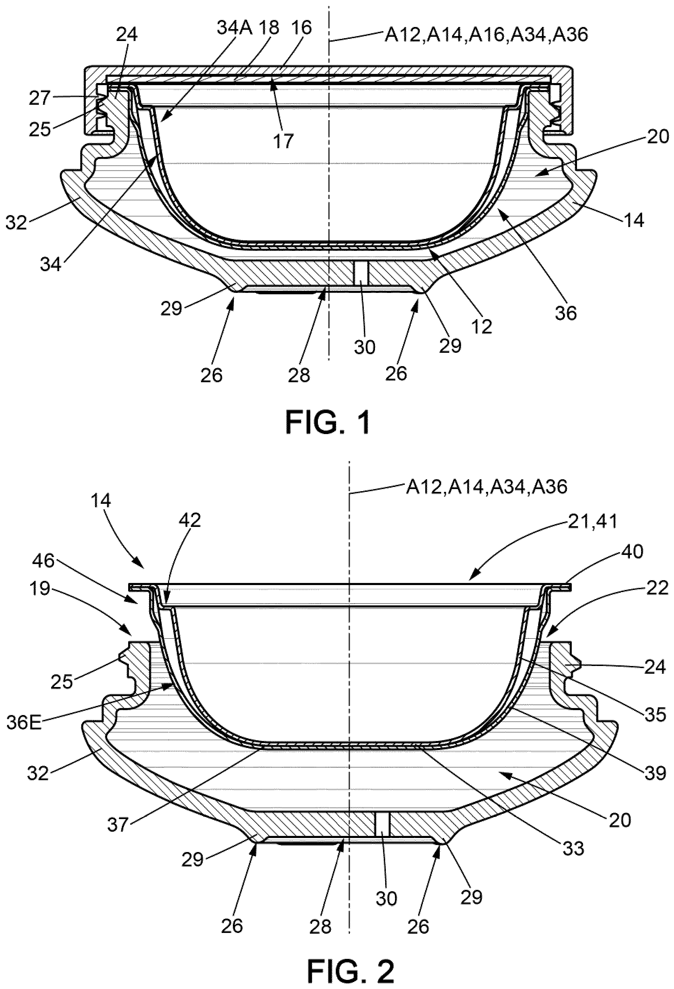

FIG. 1 illustrates an example of a refillable packaging device of a cosmetic product 10 (hereafter packaging device **10**). This packaging device **10** essentially comprises a removable container **12** of cosmetic product, an outer shell **14** receiving the removable container**12**, a lid **16** and a seal **18,** here held to the lid **16.**

The lid **16** is, in particular, in one from among glass, metal, ceramic, porcelain, crystal, plastic, natural stone, synthetic stone, ceramic, porcelain, wood, and urea formaldehyde. The lid **16** may be in several parts assembled together, particularly an outer body receiving an insert, the insert forming a means of fixation onto the outer shell, particularly a helical thread.

The seal **18** aims to prevent the cosmetic product **P** contained in the removable container **12** from drying out and/or prevent its volatile components from evaporating. The seal **18** is for example held tight between a bottom **17** of the lid **16** and an edge **19** of the outer shell **14,** the seal closing an outlet **21** of the removable container **12.**

More specifically, the outer shell **14** defines a recess **20** intended to receive, at least in part, the removable container **12.** The recess **20** opens at an outlet **22** in the outer shell **14,** surrounded by the edge **19.**

The outer shell **14** also forms a collar **24,** the free end of which forms the edge **19.** The edge **19** extends around the outlet **22.** The collar **24** here presents a helical thread **25,** complementary to a thread **27** inside the lid **16.** The lid **16** may thus be fixed to the outer shell **14** by screwing. Of course, other means of fixing the lid **16** onto the outer shell **14** are possible and accessible to the person skilled in the art. For example, the lid **16** may be snap-fitted (or " clipped ") onto the outer shell **14.**

Here, the outer shell **14** is shaped to allow the outer shell **14** to be balanced on a flat support. As illustrated, the outer shell **14** rests on such a flat support by a bearing area **26** surrounding a bottom **28,** recessed in comparison to the bearing area **26.** In a variation, the bottom **28** is not recessed in comparison to the bearing area **26** but, on the contrary, forms part of this bearing area **26.** The bearing area **26** has, for example, a closed contour, particularly a circular or elliptical, or any other shape, contour. Alternatively, the bearing area **26** is formed, as illustrated, by separate feet **29,** of the outer shell **14,** extending from the bottom **28** of the outer shell **14.** The bottom **28** of the outer shell **14** may present, as illustrated, a through hole **30** opening firstly on the bottom **28,** outside the outer shell **14,** and, secondly, in the recess **20.** The hole **30** may advantageously allow a finger to be inserted. To do this, the hole **30** may present a diameter of not more than 15 mm, preferably not more than 10 mm. Alternatively, however, the hole **30** has a size that does not allow a finger to be inserted, for example a diameter of less than 5 mm, preferably less than 2 mm. In this case in particular, the function of the hole **30** is to allow the air contained in the recess **20** to escape during assembly of the removable container **12** into the outer shell **14.** Alternatively again, the bottom **28** lacks a hole **30.**

According to an embodiment that is not represented, the flat bottom **28** of the outer shell **14** is at least partially covered by a label, the label may or may not cover the hole **30.** The label may, for example, bear any information relating to the product brand and/or its composition and/or its method of application and/or its possible expiration date.

Between the bottom **28** and the edge **24** around the outlet **22,** the outer shell **14** here forms a lateral wall **32** that is at least in part tubular. The part of the lateral wall **32** near the flange **19** forms the collar **24.** The lateral wall **32** is rotationally symmetrical about a main axis of extension **A14** of the outer shell **14** (hereafter the axis **A14** of the outer shell **14**), preferably fully rotationally symmetrical. Of course, this shape of the outer shell **14** is not limiting, it may present substantially any shape, particularly any shape aiming to ensure the esthetics of the packaging device **10.** For example, the outer shell **14** may form, between the bottom **28** and the flange **19,** a lower portion, near the bottom **28,** that is parallelepipedic and an upper portion, near the flange **19,** that is tubular, particularly having a general rotationally symmetrical shape about the axis **A14** of the outer shell **14,** preferably fully rotationally symmetrical.

The outer shell **14** is preferably opaque. This confers an esthetic effect appreciated by users to the outer shell **14** and to the packaging device **10.** The outer shell **14** may alternatively be at least partially translucent and/or may present portions that are at least partially translucent.

The outer shell **14** may particularly be made in one from among: glass, metal, ceramic, porcelain, crystal and plastic, particularly polymethyl methacrylate, polystyrene, polycarbonate, polyethylene terephthalate, ionomeric resin such as the ethylene vinyl copolymer known by the trade name Surlyn^{®}, polyethylene (PE), polypropylene (PP), copolyester, natural stone, synthetic stone, wood, and urea formaldehyde. Preferably, the outer shell **14** is in glass, still preferably tinted glass, particularly lacquered glass. In a remarkable manner, the removable container **12** is in a material that is sufficiently flexible to be adapted to outer shells **14** presenting relatively high manufacturing tolerances. Therefore, a large number of different materials may be implemented for making the outer shell **14.**

In addition, the removable container **12** here comprises a cup **34** and a shell **36,** fixed together, the shell **36** forming a recess at least in part receiving the cup **34.**

The cup **34** is in a cellulose-based material. The cup **34** is covered, on an inner face **34A,** intended to be oriented towards the cosmetic product, by a barrier film **38.** Preferably, the barrier film **38** covers the totality of the inner face **34A** of the cup **34,** particularly the inner face **34A** of the cup **34** that would otherwise be in contact with the cosmetic product **P.** Therefore, the cosmetic product contained in the removable container **12** is preferably in contact with the barrier film **38** but not with the cellulose-based material of which the cup **34** is made.

The function of the barrier film **38** is to limit or even prevent the migration of at least one component of the cosmetic product outside of the removable container **12,** through the wall of the cup **34.** The barrier film **38** is therefore preferably impermeable to at least one from among water, oils, volatile molecules such as silicones, short-chain alkanes, and gases. " Short-chain alkanes " here refers to alkanes comprising between nine and fifteen carbon atoms.

The cosmetic product **P** is, for example, a cream, an emulsion, a lotion, a gel or an oil for the skin, particularly for the body, hands, face, eye contours, and/or the feet, a foundation, particularly a liquid foundation, a beauty mask, a soap, a deodorant soap, a perfume, an eau de toilette, an eau de Cologne, a bath and/or shower preparation, a hair care product, such as a hair dye, a bleach, a wavy hair treatment, a hair relaxer, a cleaning styling setting treatment, a hair care treatment, particularly in the form of a lotion, a cream, an oil, a styling treatment, particularly in the form of a lotion, hair spray, brilliantine, a cleaning product, particularly in the form of a lotion or a shampoo, a shaving product, particularly shaving foam or lotion, a make-up product, particularly an eye make-up product, such as a mascara, a product for removing make-up from the face and/or the eyes, a product intended to be applied on the lips, such as a lipstick, a lip gloss or a lip balm, a product for the care and painting of the nails, a suncare product, a sunless tanning product, a skin whitening product, an anti-wrinkle product. The cosmetic product may particularly be in the form of a liquid, cream, gel, paste, powder, or one-piece solid. The cosmetic product **P** may also be biphasic. For example, the cosmetic product **P** comprises suspensions, particularly suspensions that are solid, in a liquid phase, in the form of a cream or a gel.

The cellulose-based material of which the cup **34** is made may contain fibers from at least one from among bamboo, bagasse, wood and recycled paper. The cellulose-based material may particularly comprise a mixture of these fibers. In particular, the cellulose-based material may comprise a mixture of between 50 and 70% by weight of fibers, of bamboo fibers, particularly 60% by weight, and the complementary to 100% by weight of fibers, of bagasse fibers.

The material of which the cup **34** is made may also comprise a dye, particularly in the form of pigments of one or more different colors, and/or at least one anti-moisture agent. An anti-moisture agent is, for example, an Alkyl Ketene Dimer (AKD). The weight proportion of dyes and of anti-moisture agent may be less than 10 % of the weight of the material of which the cup is made. For example, the weight proportion of anti-moisture agent may be between 1 % and 5 %, preferably between 2 % and 2.5 %. The weight proportion of dyes, particularly pigments, may then be less than 7.5 %, particularly less than 5 %.

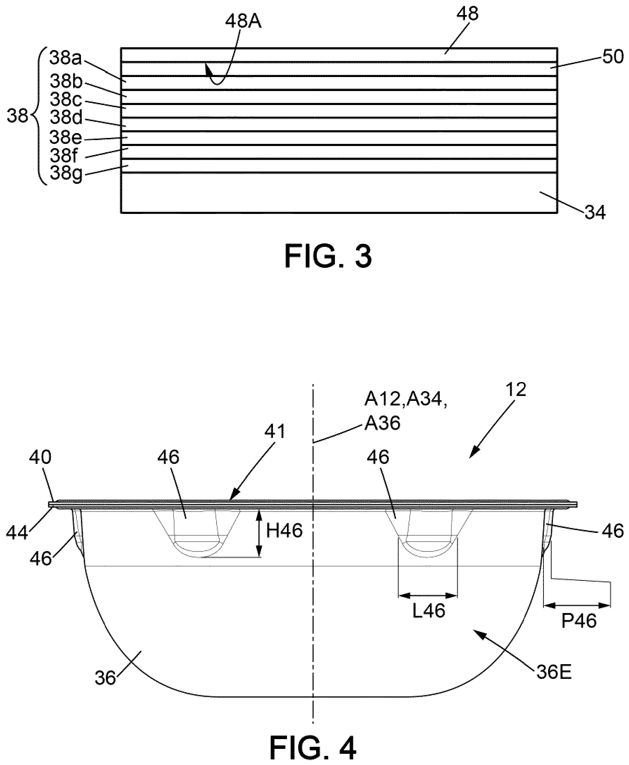

The barrier film **38** is in at least one from among polyethylene (PE), polypropylene (PP), polyamide (PA), ethylene vinyl alcohol (EVOH), ethylene vinyl acetate (EVA), cyclic olefin copolymer (COC). The barrier film **38** may be multilayered. The barrier film **38** may comprise at least five layers. The barrier film **38** may particularly comprise exactly seven layers **38a-38g,** particularly, as illustrated in FIG. 3, the seven following layers **38a-38g** , from layer **38a** oriented towards the cosmetic product contained in the removable container **12,** to layer **38g** oriented towards the cellulose-based material of which the cup **34** is made from:
- a first outer layer **38a,** of polyethylene (PE);
- a second layer **38b** of cyclic olefin copolymer (COC);
- a third layer **38c** of chemical binder, particularly a layer of a polymer comprising ethylene or an olefin-based adhesion resin;
- a fourth layer **38d** of ethylene vinyl alcohol (EVOH);
- a fifth layer **38e** of a chemical binder, particularly a layer of a polymer comprising ethylene or an olefin-based adhesion resin;
- a sixth layer **38f** of cyclic olefin copolymer (COC); and
- a seventh inner layer **38g,** of ethylene vinyl acetate (EVA).

The more layers the film barrier **38** contains, the more it is *a priori* effective. However, a high number of layers implies a significant thickness of the film barrier **38** which may then be difficult to apply to the cup **34,** particularly by lamination. Air bubbles may be trapped between the film barrier **38** and the cup **34,** which damages the appearance of the removable container **12** and/or the effectiveness of the film barrier **38.**

The cup **34** has a general bowl shape, here rotationally symmetrical about its axis of symmetry **A34** (hereafter axis of the cup **34**) intended to correspond to the axis **A14** of the outer shell **14** when the removable container **12** is fixed on the outer shell **14.** Thus, cup **34** presents a bottom **33,** here substantially flat, preferably normal to the axis **A34** of the cup **34,** and a lateral wall **35.** The lateral wall **35** forms a flange **40.** The flange **40** extends between an inner edge **40i,** surrounding the outlet **41** of the cup **34** and an outer edge **40e,** here free, opposite the inner edge **40i.** The outlet **41** of the cup **34** corresponds to the outlet **21** of the removable container **12.** In addition, cup **34** presents a shoulder **42** near flange **40.** Here it is noted that cup **34** presents a regular inner surface, lacking concave reliefs, with the exception of shoulder **42.** It seems preferable to limit or even prevent the presence of such concave reliefs which are likely to be filled with cosmetic product **P** that is difficult to remove. Such concave reliefs may thus lead to a waste of cosmetic product **P** contained in the removable container **12,** which upsets the users of the cosmetic product packaging device **10.**

For example, cup **34** is molded. The thickness of the layer of cellulose-based material forming the cup **34** may be substantially constant over a majority of the cup **34.** The thickness of the layer of cellulose-based material may particularly be equal to or greater than 0.4 mm, preferably 0.5 mm and/or less than or equal to 1 mm, preferably 0.8 mm. The thickness of the layer of cellulose-based material is, for example, equal to 0.65 mm. Alternatively, the thickness of the layer of cellulose-based material may vary. For example, the flange **40** may have a maximum thickness greater than the thickness of the rest of the lateral wall **35** of the cup **34.**

In addition, the shell **36** has a general bowl shape, here rotationally symmetrical about its axis of symmetry **A36** (hereafter axis of the shell **36**) corresponding to the axis **A34** of the cup **34** when the cup **34** and the shell **36** are fixed together. Thus, shell **36** presents a bottom **37,** here substantially flat, preferably normal to the axis **A36** of the shell **36,** and a lateral wall **39.** The lateral wall **39** of the shell **36** forms a flange **44.** The flange **44** extends between an inner edge **44i,** surrounding the outlet of the cup **36** and an outer edge **44e,** here free, opposite the inner edge **44i.**

The shell **36** thus forms a recess receiving the cup **34.** The flange **44** of the shell **36** is here fixed to the flange **40** of the cup **34** to fix the cup **34** and the shell **36** together. For example, the flange **44** of the shell **36** is bonded to the flange **40** of the cup **34,** particularly on a surface of the flange **40** of the cup **34** that is not covered by the film **38.** Preferably, the cup **34** and the shell **36** are fixed together only through their respective flanges **40, 44.** Particularly, a space is held free between the lateral walls **35, 39** of the cup **34** and the shell **36.** The bottoms **33, 37** of the cup **34** and of the shell **36** may be distant. Alternatively, the bottoms **33, 37** of the cup **34** and of the shell **36** are in contact, preferably without being fixed together.

The shell **36,** particularly the lateral wall **39** of the shell **36,** here presents a relief **46** projecting from its outer surface **36E,** oriented opposite to the cup **34.** The at least one relief **46** is preferably formed by a variation in the shape of the lateral wall **39** rather than by a local variation in the thickness of the lateral wall **39.** The at least one relief **46** preferably presents a width equal to only one portion of the perimeter of the lateral wall **35,** around the axis **A12** of the removable container **12.** In other words, the at least one relief **46** preferably does not take the form of a swelling or a bead extending on an entire perimeter of the lateral wall **35.**

The shell **36** preferably presents a plurality of reliefs **46,** particularly at least two such reliefs **46,** preferably at least three reliefs **46,** more preferably at least four reliefs **46,** more preferably at least five reliefs **46** and even more preferably at least six reliefs **46,** as illustrated in the figures. Here the reliefs **46** are regularly angularly distributed around the axis **A36** of the shell **36.** The reliefs **46** here take the form of swellings of the wall of the shell **36.** The reliefs **46** are here formed near the flange **44** of the shell **36.** The reliefs **46** are preferably opening in the direction of the shell **36,** to facilitate the unmolding of the shell **36.**

Each relief **46** presents, for example:
- a height **H46,** measured along the direction of the axis **A36** of the shell **36,** of between 5 mm and 10 mm, particularly equal to 7.5 mm; and/or
- a width **L46** at mid-height, of between 5 and 10 mm, particularly equal to 9 mm; and/or
- a depth **P46** of between 0.75 and 2 mm, particularly equal to 1.2 mm.

The shell **36** is preferably in a flexible material, particularly more flexible than the material in which the outer shell **14** is made. The shell **36** is, for example, in a cellulose-based material similar to that of the cup **34,** such as described previously, preferably in the same cellulose-based material as that in which the cup **34** is made. According to one example, shell **36** is not covered, on any of its faces, by a barrier film similar to the barrier film **38** covering the inner face **34A** of the cup **34,** such as described previously. Indeed, such a film may not be useful, the shell **36** not being intended to be in contact with the cosmetic product contained in the removable container **12.**

For example, shell **36** is molded. The thickness of the layer of cellulose-based material may be substantially constant over a majority of the shell **36.** The thickness of the layer of cellulose-based material of which the shell **36** is made may particularly be equal to or greater than 0.4 mm, preferably 0.5 mm and/or less than or equal to 1 mm, preferably 0.8 mm. The thickness of the layer of cellulose-based material is, for example, equal to 0.65 mm. Alternatively, the thickness of the layer of cellulose-based material of which the shell **36** is made may vary. For example, the flange **44** may have a maximum thickness greater than the thickness of the rest of the lateral wall **39** of the shell **36.** Alternatively or in addition, the thickness of the lateral wall **39** of the shell **36** may be less at the reliefs **46.** The thickness of the lateral wall **39** of the shell **36** may particularly be equal to 0.6 mm at the reliefs **46.**

The removable container **12** is shaped to be received in the recess **20** inside the outer shell **14,** such that the flange **44** of the shell **36** rests on the edge **19** around the outlet of the outer shell **14.** The removable container **12** is here held in position in the recess **20** inside the outer shell **14** by deformation of at least one relief **46** of the shell **36.** Preferably, at least two reliefs **46,** or even all the reliefs **46** are deformed in contact with the outer shell **14** when the removable container is fixed in the recess **20** inside the outer shell **14.** To do this, for example:
- the flanges **40, 44** rest on the free end of the collar **24** surrounding the outlet **22** of the recess **20** in the outer shell **14,** for example by choosing a diameter of the flanges **40, 44** of the cup **34** and of the shell **36** greater than the diameter of the outlet **22** of the recess **20** in the outer shell **14,** particularly substantially equal to the diameter of the collar **24;**
- a space is maintained between the collar **24** and the outer shell **14** and the lateral wall **39** of the shell **36** exclusive of reliefs **46,** for example by choosing a diameter exclusive of reliefs **46** of the lateral wall **39** of the shell **36** of less than the diameter of the outlet **22** of the recess **20** in the outer shell **14;** and
- the reliefs are in contact with the collar **24** of the outer shell **14,** for example by choosing a diameter of the lateral wall **39** of the shell **36** at the reliefs **46** greater, at least locally, than the diameter of the outlet **22** of the recess **20** in the outer shell **14.** Preferably, the diameter of the lateral wall **35** of the cup **34** is chosen to be less than the diameter of the outlet **22** of the recess **20** in the outer shell **14** to prevent deformation of the cup **34** received in the outer shell **14.**

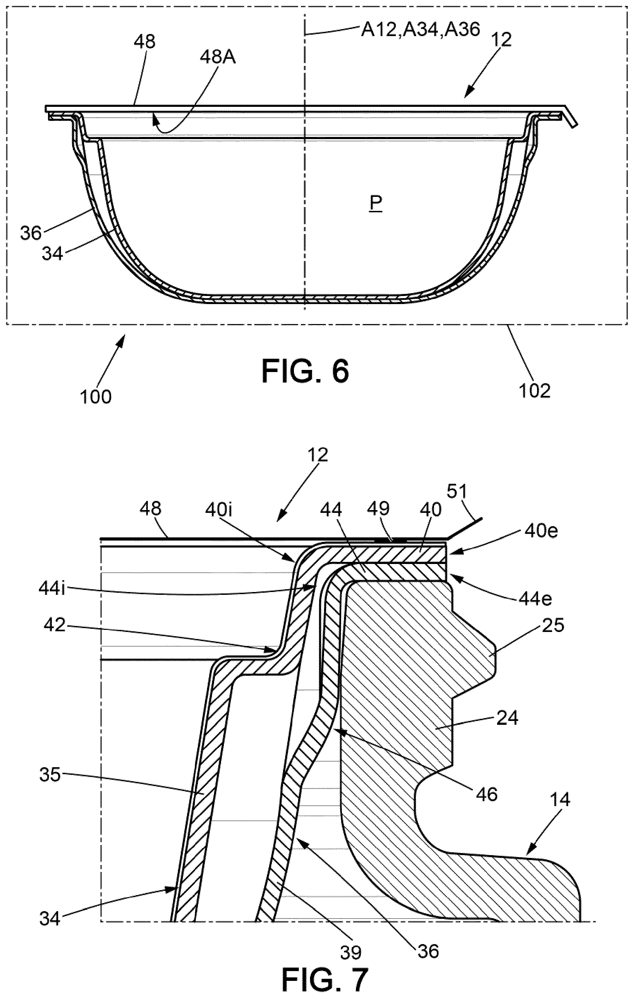

The deformation of each relief **46** may be elastic and/or plastic. Preferably, the deformation of each relief **46** is elastic, to enable the removable container **12** in an outer shell **14** to be removed and put back into place. Preferably, as illustrated in FIG. 7, the cup **34,** is not deformed when the removable container **12** is received in the outer shell **14,** only the shell **36** is deformed, mainly at the reliefs **46.** In this way the appearance is prevented of reliefs on the lateral wall **35** of the cup **34,** which could damage the proper removal of the cosmetic product, by creating pockets that are difficult to empty.

Removal of the removable container **12** outside of the outer shell **14** may particularly be done by pulling on the flange of the removable container **12.** In particular, a blade and/or a nail may be placed between the flange of the removable container **12** and the edge **24** of the outer shell **14,** to facilitate the handling of the removable container **12** necessary for its removal outside of the outer shell **14.**

In addition, as illustrated in FIG. 3 or in FIG. 6, in particular, the removable container **12** may further comprise an inner seal **48** to close, preferably impermeably to liquids and, more preferably, to gases, the outlet **41** of the cup **34** before its first use. In particular, the removable container **12** may comprise such an inner seal **48** in the packaging device **10** before its first use, or in a refill **100** of cosmetic product **P** including such a removable container **12** closed by the inner seal **48,** received in a sealed envelope **102.** According to a first example, the envelope **102** may be sealed so as to be impermeable to liquids and preferably to gases. Alternatively, the envelope **102** is a packaging, particularly a case, in cellulose or in cardboard, preferably molded.

The inner seal **48** is, for example, in aluminum or in an aluminum alloy, in a plastic material, particularly in polyethylene terephthalate (or PET) or in polyethylene furanoate (or PEF) or else in paper, particularly in coated paper.

As illustrated in FIG. 3, the inner seal **48** may be covered on at least one lower face **48A,** intended to be oriented towards the cosmetic product contained in the cup **34,** by an impermeable coating **50,** particularly a coating impermeable to liquids, preferably to gases. The coating **50** contains, for example, an epoxy resin and a methacrylate olefin polymer. The coating **50** here preferably has a double function of protecting the cosmetic product by preventing direct contact of the cosmetic product with the inner seal **48,** while allowing, or even supporting, the fixation of the inner seal **48** onto the cup **34,** particularly by welding or bonding.

The inner seal **48** is preferably flexible, particularly more flexible than the cup **34.** The inner seal **48** is, for example, stretched over the outlet **41** of the cup **34.**

The inner seal **48** is preferably fixed to the flange **40,** at a fixation area **49.** The fixation area **49** corresponds to one portion only of the surface of the flange **40** of the cup **34,** covered with film **38.** The fixation area **49** has, for example, an annular shape. The width of the fixation area **49** may be equal to or greater than 1 mm and/or less than or equal to 5 mm, particularly equal to 2 mm. The inner seal **48** is, for example, welded, particularly welded by ultrasound, at the flange **40,** on the fixation area **49.** The inner seal **48,** particularly a tab **51** formed by the inner seal **48,** may extend beyond the flange **40** of the cup **34,** free in comparison to the cup **34.** This tab **51** may facilitate the gripping and handling of the inner seal **48,** particularly necessary for the removal of the inner seal **48** from the cup **34.**

To limit the risks of delamination of the film **38** during this removal of the inner seal **48** from the cup **34,** the flange **40** of the cup **34** presents a geometry adapted to limit or even negate the tangential stresses exerted by the inner seal **48** on the film **38** covering the cup **34,** during the removal of the inner seal **48,** which tend to embed the film **38** with the inner seal **48** and, thus, delaminate the film **38** from the cup **34.**

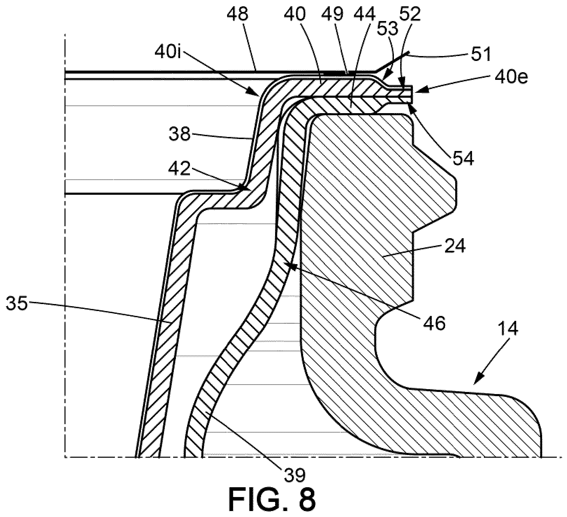

Thus, as illustrated in FIG. 8, the flange **40** of the cup **34** presents a thinning **52** in the form of an outer annular portion of reduced thickness, particularly in comparison to an inner annular portion of the flange **40.** Here, for example, the thinning **52** is formed by an outer portion, the thickness of which is substantially half that of the thickness of the rest of the flange **40.** Alternatively or in addition, the thickness of the outer portion forming the thinning **52** is between 0.2 mm and 0.5 mm, particularly it is equal to 0.365 mm. Here, the thinning **52** extends to the free outer edge **40e,** of the flange **40.** In this case, the flange **40** of the cup **34** also comprises a transition portion **53** of variable thickness, particularly of decreasing thickness towards the outer edge **40e** of the flange **40,** between the portion of reduced thickness **52** and the lower portion, of greater thickness, here with a substantially frustoconical shape. In this transition portion **53,** the fixation force of the barrier film **38** on the flange **40** tends to oppose the tensile forces exerted by the inner seal **48** on the barrier film **38** when the inner seal **48** is removed from the cup **34,** limiting or even preventing the risks of delamination of the barrier film **38.**

For ease of fabrication of the removable container **12,** the flange **44** of the shell **36** may also comprise a thinning **54** in the form of a portion of reduced thickness. The thinning **54** of the flange **44** of the shell **36** may be arranged level with the thinning **52** of the flange **40** of the cup **34.** In fact, the thinnings **52, 54** of the flanges **40, 44** may be formed simultaneously, by pinching, once the cup **34** is fixed in the shell **34.** Also in this case, the thinning **54** forms a transition portion **53,** the thickness of which decreases towards the outer edge **40e** of the flange **40,** enabling the risks of delamination of the barrier film **38** during removal of the inner seal **48** to be limited, as explained previously.

It should be noted here that the thickness of the barrier film **38** covering the inner face **34A** of the cup **34** and, here, the upper free face of the flange **40,** may be substantially constant over the entire flange **40** of the cup **34,** the pinching mentioned previously being substantially without effect on the barrier film **38.** The thickness of the barrier film is, for example, of between 0.1 mm and 0.5 mm, particularly equal to 0.2 mm.

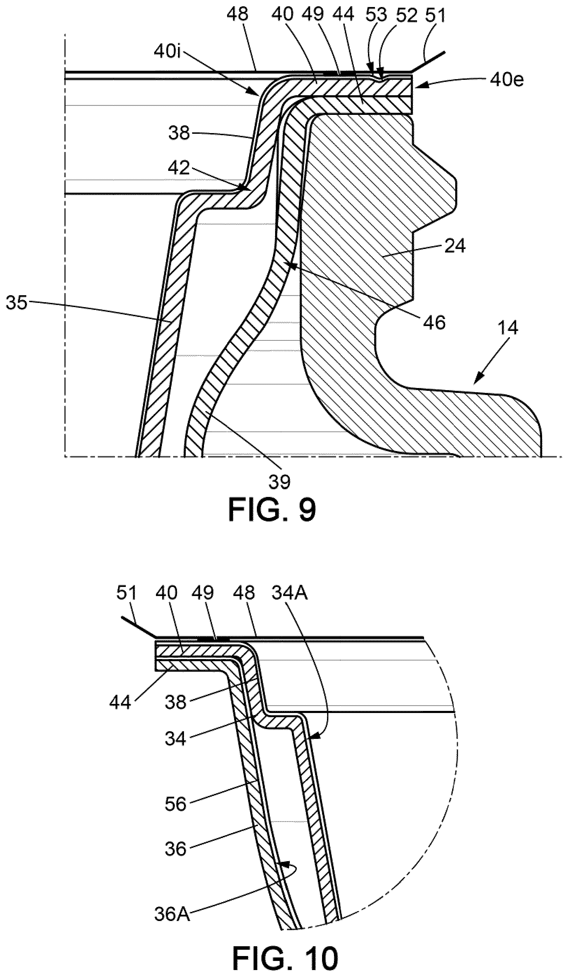

According to another example, illustrated in FIG. 9, the thinning **52** of the flange **40** is distant from the free outer edge **40e,** of the flange **40.** Therefore, the thinning **52** of the flange **40** may form a groove on the free face of the flange **40** of the cup **34.**

Here, the groove may be formed on the flange **40** of the cup **34** before fixation of the cup **34** in the shell **36.** Thus, the shell **36** may lack the thinning **54** of the flange **44** level with the thinning **52** of the flange **40** of the cup **34.**

It should be noted that in the two cases (from FIG. 8 and from FIG.9), the thinning **52** is arranged radially outwards in comparison to the fixation area **49** of the inner seal **48** on the flange **40.**

FIG. 10 illustrates a second example of a removable container **12,** which differs from the first example described previously in that the shell **36** is covered on an inner face **36A** by a barrier film **56.** The barrier film **56** is preferably impermeable to liquids and, more preferably, to gases. Thus, the barrier film **56** may further reduce the risks of migration of components from the cosmetic product **P** contained in the removable container **12,** through the cup **34** and the shell **36.** The barrier film **56** may be similar or even identical to the barrier film **38** covering the inner face **34A** of the cup **34.**

Furthermore, in the example illustrated in FIG. 10, the flanges **40, 44** of the cup **34** and of the shell **36** do not present thinnings **52, 54,** respectively. However, the flanges **40, 44** may present a thinning **52, 54** as illustrated in FIG. 8 or FIG. 9.

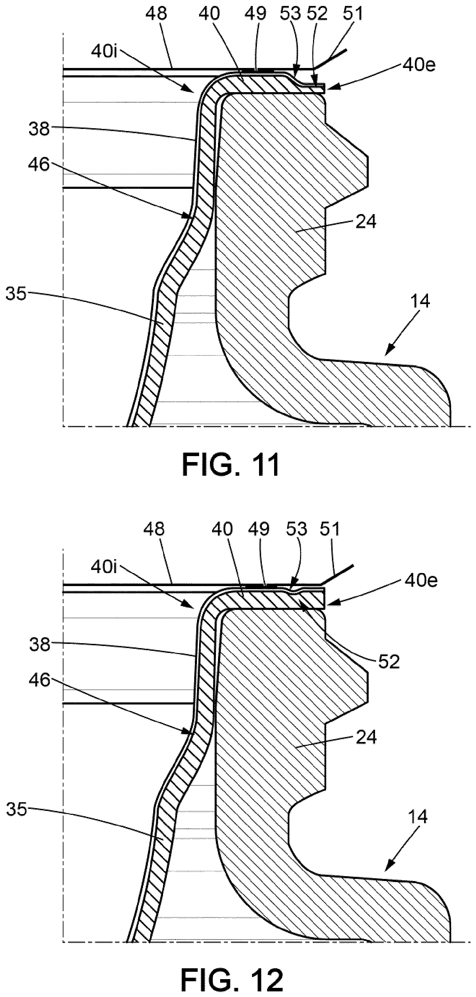

Lastly, FIG. 11 and FIG. 12 illustrate variations of FIG. 8 and FIG. 9, respectively, in which the removable containers **12** are each time constituted of a single cup **34.** In other words, each removable container **12** illustrated in FIG. 11 and in FIG. 12 is lacking a shell **36.** In this case, the cup **34** presents reliefs **46** adapted to be deformed in an elastic and/or plastic manner, to maintain the removable container **12** in the outer shell **14.** The reliefs **46** are then similar to those formed on the shell **36,** previously described. Also in this case, the reliefs **46** are deformed during insertion of the removable container **12** in the outer shell **14.**

However in this case, the cup **34** is similar to the cup **34** from the examples previously described, but may present a substantially greater thickness. Thus, in particular, the thickness of the layer of cellulose-based material may be substantially constant over a majority of the cup **34.** The thickness of the layer of cellulose-based material may particularly be equal to or greater than 0.5 mm, preferably equal to or greater than 0.8 mm and/or less than or equal to 1.6 mm, preferably less than or equal to 1.5 mm. The thickness of the layer of cellulose-based material may alternatively vary. In particular, the thickness of the layer of cellulose-based material may be reduced at the reliefs **46.**

As illustrated, in addition, the cup **34** of each removable container **12** illustrated in FIG. 11 and in FIG. 12 may have a flange **40** with a thinning **52** identical to the thinning **52** present on the flange **40** of the cup **34** from the examples described previously.

The invention is not limited to only the embodiments described above with regard to the figures, but is, on the contrary, subject to numerous variations accessible to the person skilled in the art. In particular, the features of the different embodiments described may be combined in embodiments not illustrated in the figures.

Furthermore, in the examples described, the bottom of the removable container **12** is substantially flat. However, the bottom of the removable container **12** may take other forms. In particular, the bottom may present a relief such as a pin for example, not allowing the removable container to be placed flat on a flat support. Such a pin then requires the use of the outer shell **14** to receive the removable container **12,** to be able to use the removable container **12,** particularly to collect the cosmetic product contained in the removable container **12,** by preventing it from turning over. According to another variation, the bottom of the removable container is rounded.

## Claims

1. A removable container (12) for a cosmetic product, intended to be received in an outer shell (14) of a packaging device of a cosmetic product (10), the removable container (12) comprising a cup (34) in a cellulose-based material, covered, on an inner face (34A), intended to be oriented toward the cosmetic product, by a barrier film (38) adapted to limit or even prevent the migration of at least one component of the cosmetic product through the cup (34), wherein the barrier film (38) is multilayered, the barrier film (38) comprising at least five layers (38a-38g), one of the at least five layers (38a-38g) being preferably made of cyclic olefin copolymer, wherein the cup (34) more preferably contains the cosmetic product (P).

2. The removable container according to claim 1, wherein the cellulose-based material contains fibers from at least one from among bamboo, bagasse, wood, and recycled paper, wherein the cellulose-based material preferably comprises a mixture of between 50 and 70% by weight of fibers, of bamboo fibers, particularly 60% by weight, and the complementary to 100% by weight of fibers, of bagasse fibers.

3. The removable container according to claim 1 or 2, wherein the barrier film (38) comprises at least one layer in at least one from among polyethylene, polypropylene, polyamide, ethylene vinyl alcohol, ethylene vinyl acetate.

4. The removable container according to one of claims 1 to 3, wherein the barrier film (38) comprises exactly seven layers (38a-38g), wherein the barrier film (38) preferably comprises the seven following layers (38a-38g) , from a first layer (38a) designed to be oriented towards the cosmetic product, to a seventh layer (38g) oriented towards the cellulose-based material of which the cup (34) is made from:
- a first layer (38a) of polyethylene;
- a second layer (38b) of cyclic olefin copolymer;
- a third layer (38c) of chemical binder, particularly a layer of a polymer comprising ethylene or an olefin-based adhesion resin;
- a fourth layer (38d) of ethylene vinyl alcohol;
- a fifth layer (38e) of a chemical binder, particularly a layer of a polymer comprising ethylene or an olefin-based adhesion resin;
- a sixth layer (38f) of cyclic olefin copolymer; and
- a seventh layer (38g) of ethylene vinyl acetate.

5. The removable container according to any one of the preceding claims, furthermore comprising an inner seal (48) closing the cup (34), the inner seal (48) preferably being in aluminum or in an aluminum alloy, in a plastic material, particularly in polyethylene terephthalate or in polyethylene furanoate, or in paper, particularly in coated paper, wherein the inner seal (48) is preferably covered, on at least one inner face (48A), intended to be oriented towards the cosmetic product inside of the cup (34), by a coating impermeable to liquids and, more preferably, to gases, the impermeable coating even more preferably containing an epoxy resin and a methacrylate olefin polymer.

6. The removable container according to any one of the previous claims, wherein the cup (34) presents a bottom (33), an opening (41) and a lateral wall (35) between the bottom (33) and the opening (41).

7. The removable container according to claim 6, wherein the lateral wall (35) of the cup (34) forms a flange (40), preferably substantially flat, extending between an inner edge (40i), delimiting the opening (41) of the removable container (34), and an outer edge (40e), opposite from the inner edge (40i), the flange (40) preferably being at least partially covered by the barrier film (38).

8. The removable container according to claim 7, wherein the flange (40) presents at least one from among a portion (53) of decreasing thickness in the direction of the outer edge (40e) of the flange (40) and a thinning (52), near the outer edge (40e), wherein the flange (40) preferably presents a thinning (52) extending to the outer edge (40e) or a thinning (52), distant from the outer edge (40e).

9. The removable container according to claim 8 in combination with claim 5, wherein the inner seal (48) is fixed, particularly bonded or welded, on the flange (40) at a fixation area (49), the fixation area (49) being arranged closer to the inner edge (40i) of the flange (40) than the portion (53) of decreasing thickness or the thinning (52), respectively.

10. The removable container according to any one of the previous claims, presenting at least one swelling (46) on an outer surface, intended to be oriented opposite the cosmetic product (P), the removable container preferably comprising a plurality of swellings (46) on the outer surface, the swellings (46) being more preferably equiangularly distributed on the removable container (12).

11. The removable container according to claim 10, wherein the at least one swelling (46) is formed on the cup (34), particularly on the lateral wall (35) of the cup (34).

12. The removable container according to claim 10, wherein the at least one swelling (46) is formed on a shell (36) in a cellulose-based material, particularly in the same material as the cup (34), the shell (36) receiving the cup (34), wherein, when the cup (34) presents a bottom (33), an opening (41) and a lateral wall (35) between the bottom (33) and the opening (41), and when the lateral wall (35) of the cup (34) forms a flange (40), preferably substantially flat, extending between an inner edge (40i), delimiting the opening (41) of the removable container (34), and an outer edge (40e), opposite from the inner edge (40i), the flange (40) preferably being at least partially covered by the barrier film (38), the shell (36) preferably forms a flange (44), the cup (34) and the shell (36) being fixed together at their respective flanges (40, 44), particularly by bonding or welding, and wherein the shell (36) is more preferably covered, on a face oriented towards the cup (34), by a barrier film (56), the barrier film (56) on the shell (36) even more preferably being identical to the barrier film (38) on the cup (34).

13. A cosmetic product packaging device (10) comprising an outer shell (14) and a removable container (12) according to any one of the previous claims, the outer shell (14) defining a recess (20) for receiving the removable container (12), the recess (20) for receiving the removable container (12) opening at an outlet (22) in the outer shell (14), the outer shell (14) preferably being in one from among: glass, metal, ceramic, porcelain, crystal and plastic, particularly polymethyl methacrylate, polystyrene, polycarbonate, polyethylene terephthalate, ionomeric resin such as the ethylene vinyl copolymer known by the trade name of Surlyn^{®}, polyethylene, polypropylene, copolyester, natural stone, synthetic stone, wood, and urea formaldehyde.

14. The cosmetic product packaging device according to claim 13, wherein the removable container (12) is according to one of claims 10 to 12, wherein the removable container (12) is maintained in position in the outer shell (14) by deformation of at least one swelling (46) of the removable container (12) in contact with the outer shell (14), preferably at least two swellings (46) of the removable container (12) where appropriate, the removable container (12) more preferably containing the cosmetic product (P), and wherein the deformation of the at least one swelling (46) of the removable container (12) is preferably one among an elastic deformation and a plastic deformation.

15. The cosmetic product packaging device according to claim 13 or 14, furthermore comprising a lid (16) able to close the outlet (22) of the recess (20) in the outer shell (14), even when a removable container (12) is received in the recess (20) in the outer shell (14), particularly by being fixed onto the outer shell (14).

16. A cosmetic product refill (100) comprising at least one removable container (12) according to any one of claims 1 to 12, in a sealed envelope (102), preferably airtight, or in a case in cellulose or in molded cardboard, wherein the cup preferably comprises the cosmetic product (P).
